# EUROPÄISCHE PATENTSCHRIFT

(11) **EP 2 479 525 B1**
(45) Veröffentlichungstag und Bekanntmachung des Hinweises auf die Patenterteilung: **18.05.2016**
(21) Anmeldenummer: 12150067.2
(22) Anmeldetag: 03.01.2012
(51) Int. Cl.: F28D 15/02

(54) **Vorrichtung und Verfahren zur Kühlung einer supraleitenden Maschine**
Method and device for cooling a super-conductive machine
Dispositif et procédé de refroidissement d'une machine supraconductrice

(30) Priorität: 24.01.2011 DE 102011003041
(43) Veröffentlichungstag der Anmeldung: 25.07.2012
(73) Patentinhaber: Siemens Aktiengesellschaft, 80333 München (DE)
(72) Erfinder: Schmidt, Heinz, 91096 Möhrendorf (DE); van Haßelt, Peter, 91058 Erlangen (DE)

(56) Entgegenhaltungen:
- EP-A1- 2 606 494
- DE-A1- 10 231 434
- JP-A- S6 170 387
- JP-A- H11 118 349
- US-A- 5 848 532

## Beschreibung

Die vorliegende Erfindung bezieht sich auf eine Vorrichtung und ein Verfahren zur Kühlung einer supraleitenden Maschine.

Supraleitende Maschinen umfassen in der Regel supraleitende Spulen, welche zumindest während des Betriebs der Maschine zuverlässig gekühlt werden müssen. Seit 1987 kennt man metalloxidische Supraleitermaterialien mit Sprungtemperaturen T_{c} von über 77 K. Diese Materialien werden auch als Hoch(High)-T_{c}-Supraleitermaterialien oder HTS-Materialien bezeichnet und ermöglichen prinzipiell eine Kühltechnik mit flüssigem Stickstoff (LN₂). Maschinen, welche Spulen mit HTS-Material umfassen, können somit z.B. mit flüssigem Stickstoff (LN₂) oder mit flüssigem Neon (LNe) gekühlt bzw. betrieben werden.

Zur Kühlung von Wicklungen mit HTS-Material kommen bevorzugt Kälteanlagen in Form von sogenannten Kryokühlern mit geschlossenem He-Druckgaskreislauf zum Einsatz. Solche Kryokühler sind insbesondere vom Typ Gifford-McMahon oder Stirling oder sind als sogenannte Pulsröhrenkühler ausgebildet. Sie haben den Vorteil, dass ihre Kälteleistung quasi auf Knopfdruck zur Verfügung steht und die Handhabung von tiefkalten Flüssigkeiten vermieden wird. Bei Verwendung solcher Kälteanlagen wird die supraleitende Wicklung z.B. durch Wärmeleitung zu einem Kaltkopf eines Refrigerators indirekt gekühlt (vgl. z.B. "Proc. 16th Int. Cryog. Engng. Conf. (ICEC 16)", Kitakyushu, JP, 20.-24.05.1996, Verlag Elsevier Science, 1997, Seiten 1109 bis 1129).

Eine Kühltechnik, wie z.B. in der DE 103 21 463 A1 beschrieben, ist für die Kühlung von Rotoren elektrischer Maschinen einsetzbar. Der Rotor enthält eine rotierende Wicklung aus HTS-Leitern, die sich in einem wärmeleitend ausgebildeten Wicklungsträger befinden. Dieser Wicklungsträger ist mit einem zentralen, sich in Achsrichtung erstreckenden, zylindrischen Hohlraum ausgestattet, an den sich seitlich aus dem Wicklungsträger herausführende rohrförmige Leitungsteile anschließen. Diese Leitungsteile führen in einen geodätisch höher liegenden Kondensorraum einer Kälteeinheit und bilden zusammen mit diesem Kondensorraum und dem zentralen Rotorhohlraum ein geschlossenes Ein-Rohr-Leitungssystem. In diesem Leitungssystem befindet sich ein Kältemittel bzw. Kühlfluid, das unter Ausnutzung eines sogenannten Thermosiphon-Effektes zirkuliert. Hierbei wird in dem Kondensorraum kondensiertes Kühlfluid über die rohrförmigen Leitungsteile in den zentralen Hohlraum geleitet, wo es wegen der thermischen Ankopplung an den Wicklungsträger und damit an die HTS-Wicklung Wärme aufnimmt und verdampft. Das verdampfte Kühlfluid gelangt dann zurück über dieselben Leitungsteile in den Kondensorraum, wo es zurückkondensiert wird. Die hierfür erforderliche Kälteleistung wird von einer Kältemaschine erbracht, deren Kaltkopf an den Kondensorraum thermisch angekoppelt ist.

Der Rückstrom des Kältemittels wird dabei getrieben durch einen leichten Überdruck in den als Verdampferteil wirkenden zentralen Hohlraum hin zu dem als Kondensator wirkenden Teilen der Kältemaschine. Dieser durch das Entstehen von Gas im Verdampferteil und das Verflüssigen im Kondensorraum erzeugte Differenzdruck führt also zu dem gewünschten Kältemittelrückstrom. Entsprechende Kältemittelströmungen sind von sogenannten "Heat-Pipes" prinzipiell her bekannt.

Bei der bekannten Maschine mit Thermosiphon-Kühlung mittels einer entsprechenden Kälteeinheit erfolgt also der Transport des flüssigen Kältemittels allein unter Ausnutzung der Schwerkraft, so dass keine weiteren Pumpsysteme erforderlich sind. Dies erfordert eine Kälteeinheit bzw. einen Kondensorraum, welcher zwingend geodätisch höher angeordnet sein muss als die Maschine bzw. der Wicklungsträger. Damit verbundene Nachteile treten insbesondere bei räumlichen Beschränkungen des Maschinen- und Kälteeinheitsaufbaus auf. So kann z.B. bei einer Maschine mit senkrecht angeordneter Maschinenachse ein mit der Maschine angetriebenes Objekt, z.B. ein Motor, oberhalb der Maschine angeordnet sein. Die Maschine ist derart in ihrer Umgebung eingebaut, dass in der Ebene der Maschine kein freier Raum vorhanden ist. Die geodätisch höhere Position ist durch das angetriebene Objekt besetzt, und eine Anordnung der Kälteeinheit geodätisch höher ist in dieser Situation nicht möglich. Auch in komplexen Anwendungen, wie z.B. bei Triebwagen von Eisenbahnen, kann z.B. aus Vorschriften auf Grund von Oberleitungs- und/oder Tunnelhöhen die Bauhöhe des Triebwagens beschränkt sein. Bei gegebenen Maschinengrößen, welche in der Größenordnung der Höhenvorschrift liegen, kann selbst bei waagerechter Anordnung der Maschinenachse eine Anordnung der Kälteeinheit geodätisch höher als die Maschine nicht möglich sein.

Ein weiterer Fall, bei welchem Probleme bei einem rein schwerkraftgetriebenen Kühlmittelfluss auftreten, ist auf Schiffen oder Off-shore-Einrichtungen gegeben. Will man eine zuvor beschriebene Maschineneinrichtung auf Schiffen oder Off-shore-Einrichtungen einsetzen, so muss vielfach mit statischen Schieflagen, einem sogenannten "Trim", von z.B. bis zu ±5° und/oder mit dynamischen Schieflagen von z.B. bis zu ±7,5° in Längsrichtung gerechnet werden. Um eine Zulassung einer Klassifizierungsgesellschaft für einen Schiffseinsatz zu erhalten, muss folglich das Kühlsystem einer solchen Maschineneinrichtung an Bord eines Seefahrzeugs auch unter diesen Bedingungen eine sichere Kühlung gewährleisten. Will man die genannten Schieflagen der Maschine zulassen, so besteht dann die Gefahr, dass ein Bereich der rohrförmigen Leitungsteile zwischen dem zentralen Rotorhohlraum und der Kälteeinheit geodätisch tiefer zu liegen kommt als der zentrale Rotorhohlraum. Die Folge davon ist, dass das Kältemittel unter Einfluss der Schwerkraft den zu kühlenden Rotorhohlraum nicht erreichen kann. Eine Kühlung der Maschine und somit deren Betrieb wäre damit nicht mehr sichergestellt.

Um eine zuverlässige Kühlung auch bei Schieflagen der Maschine zu gewährleisten, ist es möglich die Maschine gegenüber der Horizontalen so geneigt anzuordnen, dass auch bei größter anzunehmender Trimlage oder Oszillationsamplitude in dem Thermosiphon-Leitungssystem immer noch ein Gefälle in Richtung auf den Rotorhohlraum vorhanden ist. Eine entsprechend geneigte Anordnung ist gerade im Schiffsbau insbesondere bei größerer Maschinenlänge aus Gründen eines dann erforderlichen großen Platzbedarfs unerwünscht. Alternativ kann statt eines Ein-Rohr-Leitungssystems für eine Kältemittelzirkulation zwischen einem Kondensorraum und dem Verdampferraum, bei dem das flüssige und das gasförmige Kältemittel durch gleiche Rohrteile vom und zum Kondensorraum strömen, ein Zwei-Rohr-Leitungssysteme verwendet werden. Dabei wird der Thermosiphon-Effekt genutzt, wie er z.B. in der WO 00/13296 A beschrieben ist. Es muss jedoch im Bereich der Hohlwelle des Rotors ein zusätzliches Rohr für das gasförmige Kältemittel vorgesehen werden. Der Kondensorraum muss geodätisch gegenüber dem Verdampferraum hoch genug angeordnet sein, um über die Schwerkraft eine zuverlässige Strömung des Kühlfluids aus dem Kondensorraum in den Verdampferraum sicherzustellen. Dies erfordert Bauraum, welcher z.B. in Schiffen nur beschränkt zur Verfügung steht.

Eine weitere Alternative stellt die Verwendung einer mechanischen Pumpe und/oder von mechanischen Ventilen dar. Das Kältemittel kann durch eine Pumpanlage zwangsumgewälzt werden. Hierfür ist jedoch ein erheblicher apparativer Aufwand erforderlich, insbesondere wenn das Kältemittel z.B. eine Temperatur von 25 bis 30 K aufweist. Derartige Umwälzanlagen bedingen erhebliche Verluste und können die Lebensdaueranforderungen des Schiffsbaus mit seinen langen Wartungsintervallen kaum erfüllen.

In der nachveröffentlichten deutschen Patentanmeldung DE 10 2010 041 194.9 der Anmelderin, die hiermit durch Bezugnahme vollumfänglich in den Offenbarungsgehalt der vorliegenden Erfindung aufgenommen wird, wird eine Anordnung beschrieben, in der die Vorrichtung zur Kühlung wenigstens zwei Kondensorräume aufweist, welche jeweils mit einem Kaltkopf in thermischen Kontakt stehen, wobei die wenigstens zwei Kondensorräume jeweils eine Verbindungsleitung aufweisen, über welche die wenigstens zwei Kondensorräume fluidisch mit einem Verdampferraum in Verbindung stehen, welche sich dadurch auszeichnet, dass die wenigstens zwei Kondensorräume derart ausgebildet sind, dass ein Kühlfluid in flüssiger Form gegen die Schwerkraft von wenigstens einem Kondensorraum in den Verdampferraum durch einen Druckunterschied zwischen einem ersten Druck im ersten Kondensorraum und einem zweiten Druck im zweiten Kondensorraum bewegbar ist, welche jeweils durch die Temperatur in den Kondensorräumen bestimmt sind. Dabei werden mehrere Kaltköpfe benötigt, was einen erhöhten apparativen Aufwand und Raumbedarf mit sich bringt. Die Verwendung getrennter Kaltköpfe für jeden Kondensorraum soll vermeiden, dass ein Wärmeausgleich zwischen den Kondensorräumen über den Kaltkopf vermittelt wird.

Aufgabe der vorliegenden Erfindung ist es deshalb, eine Vorrichtung und ein Verfahren zur Kühlung einer supraleitenden Maschine anzugeben, welche eine zuverlässige Kühlung auch bei Schieflagen von Maschinen ermöglichen und dabei einen geringen apparativen Aufwand mit geringem Raumbedarf verbinden.

Die angegebene Aufgabe wird bezüglich der Vorrichtung zur Kühlung einer supraleitenden Maschine mit den Merkmalen des Anspruchs 1 und bezüglich des Verfahrens zur Kühlung einer supraleitenden Maschine mit den Merkmalen des Anspruchs 6 gelöst.

Vorteilhafte Ausgestaltungen der erfindungsgemäßen Vorrichtung und des Verfahrens zur Kühlung einer supraleitenden Maschine gehen aus den jeweils zugeordneten abhängigen Unteransprüchen hervor. Dabei können die Merkmale der nebengeordneten Ansprüche untereinander und mit Merkmalen der Unteransprüche sowie Merkmale der Unteransprüche untereinander kombiniert werden.

Entsprechend zeichnet sich die erfindungsgemäße Vorrichtung zur Kühlung eines Supraleiters einer supraleitenden Maschine dadurch aus, dass sie wenigstens zwei thermisch voneinander entkoppelte Kondensorräume aufweist, welche an einen einzigen Kaltkopf, insbesondere über einen vorbestimmten Wärmewiderstand, thermisch gekoppelt sind, und wobei die wenigstens zwei Kondensorräume über einen Sammelbehälter für flüssiges Kühlfluid mit jeweils einer Verbindungsleitung verbunden sind, über welche die wenigstens zwei Kondensorräume fluidisch mit einem Verdampferraum in Verbindung stehen, und wobei die wenigstens zwei Sammelbehälter derart ausgebildet sind, dass ein Kühlfluid in flüssiger Form gegen die Schwerkraft von wenigstens einen Sammelbehälter in den Verdampferraum durch einen Druckunterschied zwischen einem ersten Druck im ersten Sammelbehälter und einem zweiten Druck im zweiten Sammelbehälter bewegbar ist, welche Drücke jeweils durch einen mittels eines zyklisch betreibbaren Heizmittels in wenigstens einem der Sammelbehälter verdampften Anteil des Kühlfluids bestimmt sind.

Es werden also wenigstens zwei Kondensorräume verwendet, an die sich wenigstens ein Sammelbehälter für flüssiges Kühlfluid unmittelbar oder mittelbar, also beispielsweise über ein Rohrstück verbunden, anschließt. Dies ermöglicht es, die Temperaturen in den Sammelbehältern über ein den Sammelbehältern zugeordnetes Heizmittel unterschiedlich einzustellen. Hierdurch wiederum kann ein Druckunterschied zwischen den Sammelräumen (und den damit verbundenen Kondensorräumen) aufgebaut werden. In einem Sammelbehälter, in welchem die Temperatur durch Heizen erhöht wird, verdampft Flüssigkeit und/oder das gasförmige Kühlfluid dehnt sich aus, so dass der Druck erhöht wird. Wird das Heizmittel nicht betrieben, so sinkt, insbesondere ausgehend von dem Kaltkopf, die Temperatur auch im Sammelbehälter wieder und der Druck verringert sich, da gasförmiges Kühlfluid kondensiert wird. Mithin ist es durch unterschiedliche Änderungen der Temperatur in den Sammelbehältern der unterschiedlichen Kondensorräumen möglich, einen Druckunterschied zwischen den Sammelbehältern und damit den verschiedenen Systemteilen aufzubauen. Mit anderen Worten ist erfindungsgemäß vorgesehen, einen Temperaturunterschied zwischen wenigstens zwei Sammelbehältern herzustellen und somit auch einen Druckunterschied zu erzeugen.

Dieser Druckunterschied bewirkt eine Bewegung von flüssigem Kühlfluid durch wenigstens eine Verbindungsleitung in den Verdampferraum. Dabei wird durch einen größeren Druck in einem Sammelbehälter im Vergleich zum Verdampferraum, welcher durch einen größeren Druck in einem Sammelbehälter im Vergleich zu einem anderen Sammelbehälter entstehen kann, Kühlfluid in der Verbindungsleitung des einen Sammelbehälters in den Verdampferraum auch gegen die Schwerkraft bewegt, wenn der Druckunterschied groß genug ist. Dabei sind keinerlei bewegliche Teile wie Ventile oder mechanische Pumpen notwendig.

Da erfindungsgemäß zudem Heizmittel in den Sammelbehältern verwendet werden, ist es möglich, die wenigstens zwei Kondensorräume an ein und demselben Kaltkopf anzukoppeln. Dabei ist davon auszugehen, dass die Ankopplung an den Kaltkopf über einen Wärmewiderstand (thermischen Widerstand) geschieht, so dass eine durch eine Temperaturerhöhung im Sammelbehälter induzierte Temperaturerhöhung in einem Kondensorraum zumindest nicht unmittelbar an den wenigstens einen anderen Kondensorraum über den Kaltkopf weitervermittelt wird. Der Wärmewiderstand ist es also letztlich, der eine gewisse Zeitverzögerung schafft, die es ermöglicht, auch mit einem einzigen Kaltkopf, an den die wenigstens zwei Kondensorräume thermisch angekoppelt sind, zu arbeiten, ohne die grundsätzliche Funktionsfähigkeit der vorliegenden Erfindung in Frage zu stellen oder die Effizienz zu stark abzusenken.

Der thermische Widerstand zwischen den Kondensorräumen und dem Kaltkopf kann auch definiert gewählt werden, letztlich also vorbestimmt sein, da es durch Abstimmung der Heizleistung der Heizmittel und der thermischen Widerstände in einem Optimierungsverfahren möglich ist, einen optimierten Wirkungsgrad zu erreichen. Die thermische Ankopplung der Kondensorräume an den Kaltkopf und die Heizleistung stellen also "Stellschrauben" dar, da die Werte im Hinblick auf eine größtmögliche Effizienz gezielt gewählt werden können.

Letztlich wird die erfindungsgemäße Kühlvorrichtung also betrieben, indem beispielsweise die Sammelbehälter abwechselnd beheizt werden. Auf diese Weise wird ein kleiner Teil des Kühlfluids verdampft und dadurch das flüssige Kühlfluid von den beheizten Sammelbehältern zu dem zu kühlenden Objekt in den Verdampferraum gedrückt. Von den Kondensorräumen mit den nicht beheizten Sammelbehältern wird das im zu kühlenden Objekt, also im Verdampferraum, verdampfte gasförmige Kühlfluid angesaugt und wieder verflüssigt.

Dabei kann in konkreter Ausgestaltung vorgesehen sein, dass die Verbindungsleitungen im Bereich des Behälterbodens an den jeweiligen Sammelbehälter angeschlossen sind und/oder die Heizmittel an einer Bodenfläche des jeweiligen Sammelbehälters angekoppelt sind. Nachdem sich das verflüssigte Kühlfluid immer im Bodenbereich des Sammelbehälters sammelt, kann also nur das flüssige Kühlfluid durch den bei Beheizung entstehenden Druck in den Verdampferraum gefördert werden. Das Heizmittel greift garantiert am flüssigen Kühlfluid an und erwirkt somit eine gewisse Verdampfung.

In besonders vorteilhafter Ausgestaltung der vorliegenden Erfindung kann vorgesehen sein, dass das Heizmittel mit einer Heizleistung betrieben werden kann, die 80 % - 120 % der Leistung des Kaltkopfs, insbesondere 95 % - 105 % der Leistung des Kaltkopfs, entspricht. Wählt man die Heizleistung so, dass sie in der Größenordnung der Kaltkopfleistung liegt, wird das flüssige Kühlfluid in relativ kurzer Zeit, beispielsweise in 20 - 40 Sekunden, in den Verdampferraum gedrückt. Dadurch wird vorteilhafterweise verhindert, dass der Kondensor am beheizten Sammelbehälter über längere Zeit das von der Heizung verdampfte Kühlfluid kondensiert und dadurch die verfügbare Kälteleistung zu sehr vermindert wird.

In einer Weiterbildung des Erfindungsgedankens kann eine Steuereinrichtung zur Ansteuerung der Heizmittel, insbesondere der Einschaltdauer der Heizmittel, in Abhängigkeit der Messwerte von die Temperatur in den Sammelbehältern, insbesondere am Boden der Sammelbehälter, messenden Sensoren vorgesehen sein. Die Sensoren wirken letztlich als eine Art Detektor dafür, dass das gesamte flüssige Kühlfluid aus dem Sammelbehälter herausgefördert worden ist. Denn die Temperatur am Behälterboden steigt schnell an, wenn kein flüssiges Kühlfluid mehr vorhanden ist, so dass schnell erkannt werden kann, dass der Sammelbehälter leer ist. Dann kann beispielsweise das Heizmittel ausgeschaltet werden, und ein anderes Heizmittel eines anderen Sammelbehälters kann zur Herstellung eines neuen, anders verlaufenden Temperaturunterschieds aktiviert werden, was unmittelbar oder nach einer gewissen Pause geschehen kann.

Wärmewiderstände zwischen dem Kondensorraum und dem Kaltkopf sind bereits bekannt und können bezüglich des oben genannten Optimierungsprozesses definiert angepasst werden. Beispielsweise kann vorgesehen sein, dass als Wärmewiderstand eine Indiumlage und/oder eine Verschraubung vorgesehen ist. So ist es beispielsweise bekannt, eine Indiumlage zur Ankopplung an den Kaltkopf zu verwenden, die bis über die Fließgrenze belastet ist.

Es sei an dieser Stelle noch angemerkt, dass auch mehr als zwei Kondensorräume mit zugeordnetem Sammelbehälter vorgesehen werden können, die insbesondere alle mit demselben Kaltkopf thermisch gekoppelt sind. Unabhängig davon, ob zwei oder mehr Kondensorräume vorgesehen sind, kann die Temperatur in den jeweils zugeordneten Sammelbehältern unabhängig voneinander regelbar sein, insbesondere durch entsprechende Ansteuerung der Heizmittel. Sind wenigstens drei Kondensorräume vorgesehen, kann vorteilhaft in zwei Sammelbehältern gleichzeitig die Temperatur erniedrigt und in einem Sammelbehälter die Temperatur erhöht werden. Dabei kann zeitlich folgend zwischen den Sammelbehältern, in welchen die Temperatur erhöht und erniedrigt wird, getauscht werden, wobei aber immer in einem die Temperatur höher als in den anderen beiden ist. So wird bewirkt, dass immer aus einer Verbindungsleitung flüssiges Kühlfluid strömt und eine zuverlässige Kühlung sichergestellt ist. In den zwei Sammelbehältern, die die niedrigere Temperatur aufweisen, kann während aus der Verbindungsleitung des dritten Sammelbehälters flüssiges Kühlfluid in den Verdampferraum strömt, gasförmiges Kühlfluid verflüssigt werden, welches aus dem Verdampferraum in die zwei ersteren Sammelbehälter und die zugeordneten Kondensorräume strömt.

Über die Kondensorräume, die Sammelbehälter, die Verbindungsleitungen und den Verdampferraum kann ein geschlossener, insbesondere ein abgeschlossener Kühlkreislauf gebildet sein. Es geht kein Kühlfluid verloren und eine Wartung des Kühlmittelkreislaufs bzw. ein Auffüllen von Kühlfluid ist nicht notwendig, insbesondere, wenn ein geeignet dimensionierter Ausgleichsbehälter vorgesehen ist.

Die Vorrichtung kann mit einem Kühlfluid befüllt sein, welches eine homogene Flüssigkeit, insbesondere flüssigen Stickstoff oder flüssiges Neon, umfasst bzw. daraus besteht, oder welches eine Mischung aus Kühlflüssigkeiten mit unterschiedlichen Kondensationstemperaturen umfasst. Die Verdampfungstemperatur des Kühlfluids bestimmt die Temperatur, auf welche die supraleitende Wicklung bzw. die supraleitende Maschine gekühlt werden kann, d. h., welche supraleitenden Materialien eingesetzt werden können. Die Kondensationstemperatur des Kühlfluids bestimmt die Temperatur, auf welche der Kaltkopf die Kondensorräume abkühlen muss, um das verdampfte, gasförmige Kühlfluid wieder zu verflüssigen. Über Mischungen oder Zusätze zu den Kühlfluiden können auch Temperaturen eingestellt werden, bei welchen das Kühlfluid verdampft bzw. sich verflüssigt, welche zwischen Temperaturen liegen, bei welchen reine Stoffe, wie beispielsweise reiner Stickstoff oder reines Helium, verdampfen bzw. sich verflüssigen.

Die supraleitende Maschine kann ein Motor und/oder ein Generator sein, insbesondere mit einem Rotor mit wenigstens einer supraleitenden Wicklung, insbesondere einer supraleitenden Wicklung, welche einen Hochtemperatur-Supraleiter umfasst, wobei der Rotor um eine Achse rotierbar angeordnet ist. Die supraleitende Wicklung kann also aus HTS-Material bestehen oder dieses umfassen. Dies erlaubt die Verwendung von Stickstoff oder Neon als Kühlfluid. Eine derartige supraleitende Maschine kann beispielsweise in Schiffen eingesetzt werden.

Dabei können die Kondensorräume mit dem Kaltkopf und die jeweils zugeordneten Sammelbehälter feststehend außerhalb des Rotors angeordnet sein und der Verdampferraum kann innerhalb des Rotors, insbesondere als zylindrischer Hohlraum entlang der Rotationsachse des Rotors, rotierbar angeordnet sein. Die Verbindungsleitungen können nach dem Thermosiphonprinzip in den Verdampferraum ragen und ebenfalls feststehend sein. Dadurch werden günstige Eigenschaften der Maschine erreicht.

Neben der Vorrichtung betrifft die vorliegende Erfindung auch ein Verfahren zur Kühlung eines Supraleiters einer supraleitenden Maschine, insbesondere unter Verwendung des Thermosiphon-Effekts, wobei eine erfindungsgemäße Vorrichtung verwendet werden kann. Das erfindungsgemäße Verfahren umfasst die Schritte, dass ein Temperaturunterschied zwischen wenigstens einem ersten, mit einem an einen Kaltkopf thermisch gekoppelten Kondensorraum verbundenen Sammelbehälter und wenigstens einem zweiten, mit einem an denselben Kaltkopf thermisch gekoppelten zweiten Kondensorraum verbundenen Sammelbehälter durch den Betrieb wenigstens eines Heizmittels herbeigeführt wird, so dass in dem wärmeren Sammelbehälter Kühlfluid verdampft wird und der Druck im Sammelbehälter erhöht wird und dadurch flüssiges Kühlfluid in einer dem wärmeren Sammelbehälter zugeordneten Verbindungsleitung von dem wärmeren Sammelbehälter in einen Verdampferraum bewegt wird, und gleichzeitig gasförmiges Kühlfluid über eine dem kälteren Sammelbehälter zugeordnete Verbindungsleitung von dem Verdampferraum in den kälteren Kondensorraum bewegt wird.

Wesentlich für das erfindungsgemäße Verfahren ist es also auch, dass ein Temperaturunterschied zwischen den Sammelbehältern/den Kondensorräumen hergestellt wird, der wiederum einen Druckunterschied zur Folge hat, der die Förderung des flüssigen Kühlmittels in den Verdampferraum insbesondere auch gegen die Schwerkraft erlaubt und gleichzeitig dafür sorgt, dass das verdampfte Kühlfluid in den kälteren Kondensorraum angesaugt wird. Dabei sind verschiedene Varianten denkbar, wie dieser Temperaturunterschied konkret erreicht werden kann.

So kann beispielsweise vorgesehen sein, dass in einem ersten Sammelbehälter, welcher mit einem ersten Kondensorraum verbunden ist, eine Temperatur erhöht wird, wobei der Druck im Sammelbehälter erhöht wird, und flüssiges Kühlfluid in einer ersten Verbindungsleitung zwischen dem ersten Sammelbehälter und einem Verdampferraum durch die Temperaturerhöhung und/oder Gasausdehnung in den Verdampferraum bewegt wird, und das gleichzeitig in wenigstens einem zweiten Sammelbehälter, welcher mit einem zweiten Kondensorraum verbunden ist, eine Temperatur konstant gehalten wird oder erniedrigt wird, insbesondere eine niedrigere Temperatur als im ersten Sammelbehälter, wodurch gasförmiges Kühlfluid über eine zweite Verbindungsleitung zwischen dem Verdampferraum und dem zweiten Sammelbehälter durch die Temperaturerhöhung im ersten Sammelbehälter und/oder durch die Temperaturerniedrigung im zweiten Sammelbehälter aus dem Verdampferraum in den zweiten Kondensorraum bewegt wird. Dabei wird der Druckunterschied durch die Temperaturerhöhung im ersten Sammelbehälter aufgebaut bzw. verstärkt, wodurch durch den dadurch im ersten Sammelbehälter bestehenden Überdruck, auch im Vergleich zum Druck im Verdampferraum, flüssiges Kühlfluid in den Verdampferraum gedrückt wird. Eine Temperaturerhöhung ist einfach und schnell zu realisieren, wodurch hohe Druckunterschiede erzeugt werden können und das flüssige Kühlfluid über große Höhenunterschiede im Bereich von Zentimetern bis hin zu Metern gegen die Schwerkraft in der Verbindungsleitung bewegt werden kann.

Denkbar ist es aber auch, einen Temperaturunterschied dadurch zu erzeugen, dass sowohl in dem ersten als auch in dem zweiten Sammelbehälter die Temperatur erhöht wird, wobei die Temperaturerhöhung in einem Sammelbehälter jedoch geringer ist als die Temperaturerhöhung in dem anderen Sammelbehälter, so dass sich letztlich doch ein Druckunterschied einstellt, der zur Förderung des Kühlfluids ausreicht. In einem solchen Fall werden beide Heizmittel betrieben.

Letztlich sind jedoch alle Varianten denkbar, um einen Temperaturunterschied und den daraus folgenden Druckunterschied zu erzielen, beispielsweise auch das Konstanthalten der Temperatur in einem Sammelbehälter, beispielsweise durch einen Betrieb des Heizmittels bei geringer Leistung, wobei in einem anderen Sammelbehälter das Heizmittel abgeschaltet wird und entsprechend die Temperatur absinken kann oder dergleichen.

Anzumerken ist an dieser Stelle auch, dass bei mehreren ersten und/oder mehreren zweiten Sammelbehältern auch unterschiedliche Temperaturunterschiede hergestellt werden können, solange ein gewollter Kühlfluidstrom hergestellt wird. Beispielsweise ist es, wie bereits bezüglich der erfindungsgemäßen Kühlvorrichtung erläutert wurde, wobei sich die Ausführungen bezüglich der erfindungsgemäßen Kühlvorrichtung selbstverständlich analog auf das erfindungsgemäße Verfahren übertragen lassen, denkbar, dass in wenigstens einem dritten Sammelbehälter, welcher mit einem dritten mit dem Kaltkopf thermisch gekoppelten Kondensorraum in Verbindung steht, ebenso eine Temperatur konstant gehalten wird oder erniedrigt wird.

Dabei ist es auch beim erfindungsgemäßen Verfahren möglich, nur einen einzigen Kaltkopf zu verwenden, an den die Verschiedenen Kondensorräume angekoppelt sind. Dies wird ermöglicht, nachdem die Heizmittel in den Sammelbehältern angreifen und unabhängig regelbar sind, so dass eine unabhängige Temperaturregelung über unabhängige Kaltköpfe nicht länger erforderlich ist. Dabei sollte jedoch ein gewisser thermischer Widerstand (Wärmewiderstand) zwischen den Kondensorräumen und dem Kaltkopf gegeben sein, um auf diesem Wege auf der genutzten Zeitskala keine Verluste erleiden zu müssen.

Letztlich beruht auch das erfindungsgemäße Verfahren darauf, dass zu einer quasi kontinuierlichen Zuführung von Kühlfluid in den Verdampferraum die Temperaturunterschiede und die daraus folgenden Druckunterschiede wechselnd, insbesondere abwechselnd, hergestellt werden, so dass das in den bislang kälteren Kondensorräumen rekondensierte Kühlfluid letztlich wieder zurückgefördert werden kann. So kann vorgesehen sein, dass zeitlich direkt oder indirekt folgend auf die bislang beschriebenen Schritte in dem wenigstens einen wärmeren Sammelbehälter die Temperatur verringert oder konstant gehalten wird und das in dem wenigstens einen kälteren Sammelbehälter die Temperatur erhöht oder konstant gehalten wird. Bei zwei Sammelbehältern wird beispielsweise der Temperaturunterschied gerade umgekehrt, wobei dieser Vorgang beliebig oft wiederholbar ist. Das Verfahren kann so als ein kontinuierlicher oder gepulster Prozess des Pumpens von flüssigem Kühlfluid in den Verdampferraum durchgeführt werden.

Mit besonderem Vorteil kann eine Bewegung von Kühlfluid ausschließlich geregelt oder gesteuert über Druck- und/oder Temperaturunterschiede in den Sammelbehältern und dem Verdampferraum erfolgen, insbesondere bei Druckausgleich durch Kühlfluidbewegung und/oder insbesondere gegen die Schwerkraft. Ventile oder mechanische Pumpen müssen nicht mehr eingesetzt werden, um flüssiges Kühlfluid in einer Verbindungsleitung auch gegen die Schwerkraft in den Verdampferraum zu bewegen. Probleme an mechanischen Teilen bei Kryotemperaturen werden so vermieden und Wartungsaufwand und Kosten reduziert.

Weiterhin kann vorgesehen sein, dass in dem Verdampferraum das Kühlfluid von einem flüssigen in einen gasförmigen Zustand übergeht und eine rotierende supraleitende Wicklung eines Rotors einer supraleitenden Maschine kühlt, wobei die supraleitende Wicklung insbesondere einen Hochtemperatur-Supraleiter umfasst und/oder wobei der Verdampferraum innerhalb des Rotors insbesondere als zylindrischer Hohlraum entlang der Rotationsachse des Rotors rotierbar angeordnet wird. Dabei kann ferner vorgesehen sein, dass der eine Kaltkopf und die wenigstens zwei Kondensorräume mit ihren Sammelbehältern sowie die wenigstens zwei Verbindungsleitungen, welche insbesondere von einem die Verbindungsleitungen umhüllenden Gesamtrohr umfasst werden, feststehend angeordnet werden.

In besonders vorteilhafter Ausgestaltung des erfindungsgemäßen Verfahrens kann ferner vorgesehen sein, dass die Temperatur in jedem Sammelbehälter, insbesondere am Boden jedes Sammelbehälters, gemessen wird und die Ansteuerung der Heizmittel in Abhängigkeit der gemessenen Temperaturen erfolgt. Wie bereits bezüglich der erfindungsgemäßen Vorrichtung dargelegt, steigt die Temperatur am Behälterboden schnell an, wenn das flüssige Kühlfluid aus dem Sammelbehälter gedrückt worden ist. Dies kann über geeignete Sensoren ermittelt werden und zur Steuerung insbesondere der Einschaltdauer der Heizmittel genutzt werden.

In weiterer zweckmäßiger Weiterbildung der vorliegenden Erfindung kann zum Erhöhen der Temperatur in einem Sammelbehälter das Heizmittel mit einer Leistung von 80 - 120 % der Leistung des Kaltkopfes, insbesondere 95 % - 105 % der Leistung des Kaltkopfes, betrieben werden. Durch eine in der Größenordnung der Kaltkopfleistung liegende Heizleistung wird das flüssige Kühlmedium in relativ kurzer Zeit in den Verdampferraum gedrückt, so dass verhindert wird, dass im Kondensorraum am beheizten Sammelbehälter über längere Zeit das von dem Heizmittel verdampfte Kühlfluid kondensiert und dadurch die verfügbare Kälteleistung zu sehr verhindert wird.

Weiterhin kann vorgesehen sein, dass zur Optimierung des Wirkungsgrades ein zwischen dem Kaltkopf und den Kondensorräumen vorgesehener Wärmewiderstand und die Heizleistung der Heizmittel aufeinander abgestimmt werden. Wie bereits bezüglich der erfindungsgemäßen Vorrichtung erläutert, stellen der Wärmewiderstand und die Heizleistung Größen dar, die im Hinblick auf einen optimalen Wirkungsgrad, also eine optimale Effizienz des erfindungsgemäßen Verfahrens gewählt werden können. Beispielsweise können geeignete Werte im Rahmen eines Optimierungsverfahrens bestimmt werden, so dass letztendlich die Heizleistung und/oder der Wärmewiderstand definiert gewählt werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine schematische Schnittdarstellung einer supraleitenden Maschine mit einer Vorrichtung zur Kühlung nach dem Stand der Technik, und
- Fig. 2: eine vereinfachte schematische Darstellung einer Vorrichtung zur Kühlung entsprechend der vorliegenden Erfindung.

In den Figuren sind sich entsprechende Teile mit gleichen Bezugszeichen versehen.

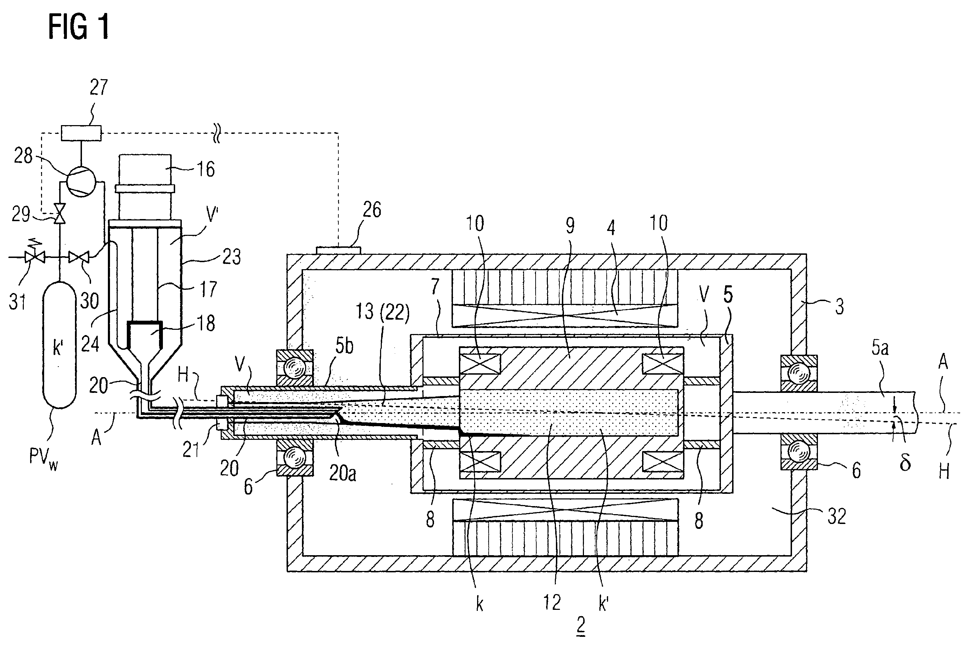

Maschinen entsprechend den Figuren umfassen jeweils einen Stator und Rotor sowie eine zugeordnete Kälteeinheit. Bei der nachfolgend angedeuteten Ausführungsform der Maschine kann es sich insbesondere um einen Synchron-Motor und/oder einen Generator handeln. Die Maschine umfasst eine rotierende, supraleitende Wicklung, die prinzipiell metallisches LTS-Material (Niedrig-T_{c}-Supraleitermaterial) oder oxidisches HTS-Material (Hoch-T_{c}-Supraleitermaterial) verwendet. Letzteres Material sei für die nachfolgenden Ausführungsbeispiele zu Grunde gelegt. Die Wicklung kann aus einer Spule oder aus einem System von Spulen in einer zwei-, vier- oder sonstigen mehrpoligen Anordnung bestehen. Der prinzipielle Aufbau eines entsprechenden Synchron-Motors geht aus Fig. 1 hervor, wie er aus dem Stand der Technik bekannt ist.

Die mit 2 bezeichnete Maschine umfasst ein feststehendes, auf Raumtemperatur befindliches Außengehäuse 3 mit einer Ständerwicklung 4. Innerhalb des Außengehäuses 3 und von der Ständerwicklung 4 umschlossen ist ein Rotor 5 drehbar um eine Rotationsachse A in Lagern 6 gelagert. Bei diesen Lagern 6 kann es sich um konventionelle mechanische Lager oder auch um Magnetlager handeln. Der Rotor weist ferner ein Vakuumgefäß 7 auf, in dem an z.B. hohlzylindrischen, drehmomentübertragenden Aufhängeelementen 8 ein Wicklungsträger 9 mit einer HTS-Wicklung 10 gehaltert ist. In diesem Wicklungsträger 9 ist konzentrisch zur Rotationsachse A ein sich in Achsrichtung erstreckender zentraler Hohlraum 12 vorhanden, der beispielsweise eine Zylinderform hat. Der Wicklungsträger 9 ist dabei vakuumdicht gegenüber diesem Hohlraum 12 ausgeführt. Er schließt diesen auf einer Seite des Rotors 5 ab, der auf dieser Seite mittels eines massiven axialen Rotorwellenteils 5a gelagert ist. Auf der gegenüberliegenden Seite ist der zentrale Hohlraum 12 an einen seitlichen Hohlraum 13 mit vergleichsweise kleinerem Durchmesser angeschlossen. Dieser seitliche Hohlraum 13 führt von dem Bereich des Wicklungsträgers 9 nach außen aus dem Bereich des Außengehäuses 3 hinaus. Ein diesen seitlichen Hohlraum 13 umschließender, in einem der Lager 6 gelagerter, rohrförmiger Rotorwellenteil ist mit 5b bezeichnet.

Zu einer indirekten Kühlung der HTS-Wicklung 10 über wärmeleitende Teile ist eine Kälteeinheit vorgesehen, von der lediglich ein Kaltkopf 16 angedeutet ist. Bei dieser Kälteeinheit kann es sich um einen Kryokühler vom Typ Gifford-McMahon oder insbesondere um einen regenerativen Kryokühler wie z.B. einen Pulsröhrenkühler oder einen Split-Stirling-Kühler handeln. Dabei befinden sich der Kaltkopf 16 und damit alle wesentlichen, weiteren Teile der Kälteeinheit außerhalb des Rotors 5 bzw. dessen Außengehäuses 3.

Das Kaltteil des beispielsweise etliche Meter seitlich von dem Rotor 5 angeordneten Kaltkopfes 16 steht in einem Vakuumgefäß 23 über einen Wärmeübertragungskörper 17 in gutem thermischen Kontakt mit einer Kältemittelkondensationseinheit, die einen Kondensorraum 18 aufweist. An diesem Kondensorraum ist ein vakuumisoliertes, ortsfestes Wärmerohr 20 angeschlossen, das seitlich in einem axialen Bereich in den seitlichen, mitrotierenden Hohlraum 13 oder den zentralen Hohlraum 12 hineinragt. Zur Abdichtung des Wärmerohres 20 gegenüber dem seitlichen Hohlraum 13 dient eine in der Figur nicht näher ausgeführte Dichtungseinrichtung 21 mit mindestens einem Dichtungselement, das als eine Ferrofluiddichtung und/oder eine Labyrinthdichtung und/oder eine Spaltdichtung ausgebildet sein kann. Über das Wärmerohr 20 und den seitlichen Hohlraum 13 ist der zentrale Hohlraum 12 mit dem Wärmetauschbereich des Kondensorraums 18 nach außen gasdicht abgedichtet verbunden. Die zwischen dem zentralen Hohlraum 12 und dem Kondensorraum 18 verlaufenden, rohrförmigen Teile, die zur Aufnahme eines Kältemittels dienen, sind allgemein als Leitungsteile 22 bezeichnet. Diese Leitungsteile 22 werden zusammen mit dem Kondensorraum 18 und dem zentralen Hohlraum 12 als ein Leitungssystem betrachtet.

Diese Räume dieses Leitungssystems sind mit einem Kältemittel gefüllt, das je nach gewünschter Betriebstemperatur der HTS-Wicklung 10 ausgewählt wird. So kommen beispielsweise Helium (Kondensationstemperatur 4,2 K bei Normaldruck), Wasserstoff (Kondensationstemperatur 20,4 K bei Normaldruck), Neon (Kondensationstemperatur 27,1 K bei Normaldruck), Stickstoff (Kondensationstemperatur 77,4 K bei Normaldruck) oder Argon (Kondensationstemperatur 87,3 K bei Normaldruck) in Frage. Auch können Gemische aus diesen Gasen vorgesehen werden. Die Zirkulation des Kältemittels erfolgt dabei unter Ausnutzung eines sogenannten Thermosiphon-Effektes. Hierzu wird an einer Kaltfläche des Kaltkopfes 16 im Bereich des Kondensorraums 18 das Kältemittel kondensiert. Anschließend fließt das so verflüssigte, mit k bezeichnete Kältemittel durch die Leitungsteile 22 in den zentralen Hohlraum 12. Der Transport des Kondensats geschieht dabei unter Einfluss der Schwerkraft. Hierzu kann vorteilhaft das Wärmerohr 20 geringfügig (um einige wenige Grad) gegenüber der Rotationsachse A in Richtung Erdmittelpunkt geneigt sein, um so ein Herausfließen des flüssigen Kältemittels k aus dem offenen Ende 20a des Rohres 20 zu unterstützen. Im Inneren des Rotors 5 wird dann das flüssige Kältemittel k verdampft. Das dampfförmige Kältemittel ist mit k' bezeichnet. Dieses unter Aufnahme von Wärme verdampfte Kältemittel k' strömt dann durch das Innere der Leitungsteile 22 zurück in den Kondensorraum 18. Hierbei wird der Rückstrom durch einen leichten Überdruck im als Verdampfer wirkenden Hohlraum 12 in Richtung auf den Kondensorraum 18 hin angefacht, der durch das Entstehen von Gas im Verdampfer und das Verflüssigen in dem Kondensorraum 18 verursacht wird. Da die Zirkulation des verflüssigten Kältemittels k von dem Kondensorraum 18 in den zentralen Hohlraum 12 und die Rückströmung des verdampften Kältemittels k' aus diesem Hohlraum 12 zurück zu dem Kondensorraum 18 in dem aus dem Kondensorraum 18, den Leitungsteilen 22 und dem Hohlraum 12 gebildeten rohrförmigen Leitungssystem erfolgt, kann von einem Ein-Rohr-System mit einer Zirkulation des Kältemittels k, k' unter Ausnutzung eines Thermosiphon-Effektes gesprochen werden.

Wie in Fig. 1 ferner dargestellt ist, kann bei einem Einsatz der Maschine 2 auf Schiffen oder Off-shore-Einrichtungen eine Schieflage auftreten, bei der die Rotationsachse A gegenüber der Horizontalen H um einen Winkel δ von einigen Grad geneigt ist. Dann erfolgt zwar nach wie vor eine Kondensation des Kältemittels in dem Kondensorraum 18; aber das Kältemittel kann nicht mehr den zentralen Hohlraum 12 erreichen, so dass dann die Leitungsteile 20, 22 allmählich mit flüssigem Kältemittel k volllaufen. Bei einer verhältnismäßig geringen Füllmenge des Leitungssystems mit Kältemittel k, k' kann dann der Läuferinnenraum bzw. der Hohlraum 12 trocken laufen und wird somit nicht mehr gekühlt. Auch bei einer größeren Füllmenge des Leitungssystems wird der Strom des flüssigen Kältemittels k in den Leitungsteilen 20, 22 hin zum Verdampferraum 12 nach einer gewissen Zeit blockiert. Eine sichere Kühlung des Rotors 5 bzw. seiner supraleitenden Wicklung 10 ist in diesem Fall ebenfalls nicht mehr gewährleistet.

Gemäß dem Stand der Technik kann deshalb vorgesehen sein, dass in diesem Zustand der Gasdruck auf der Kondensorseite für eine kurze Zeit soweit zu erhöhen ist, dass hierdurch die Kältemittelflüssigkeit aus den Leitungsteilen 20, 22 entgegen der Schwerkraft (bei Vorhandensein des Neigungswinkels δ) in den zentralen Hohlraum 12 gedrückt wird. Eine solche Druckerhöhung erfolgt gemäß dem Stand der Technik mit Hilfe eines warmen Puffervolumens PV_{w} und einer mechanischen Pumpe 28. Mit Hilfe dieser Mittel kann der Gasdruck in dem Kondensorraum 18 vorübergehend erhöht werden, so dass das dort und in den Leitungsteilen 20 befindliche flüssige Kältemittel k in den zentralen Hohlraum 12 gedrückt wird. In einer Verbindungsleitung 24 zwischen dem unter Überdruck stehenden Puffervolumen PV_{w} und dem Kondensorraum 18 ist deshalb ein Steuerventil 29 angeordnet, das die Verbindung zu der Pumpe 28 öffnet, die dann das Gas k' aus dem Puffervolumen in den Kondensorraum fördert. Ein Ventil 30 erlaubt eine Rückführung von überschüssigem Gas aus dem Kondensorraum 18.

Eine so hervorzurufende Druckoszillation kann permanent erfolgen, d.h. in kurzen, sich wiederholenden Zeitintervallen (jeweils für eine kurze Zeitdauer), oder kann durch einen Lagesensor 26 bekannter Bauweise von einer Steuereinheit 27 gesteuert werden. Dieser Lagesensor detektiert die Schieflage mit dem Neigungswinkel δ der Maschine 2 und löst so über die Steuereinheit 27 die erläuterte Einleitung eines Druckvolumens (Gaspulses) aus.

In Fig. 1 wurde von einer Darstellung weiterer Teile zur Bereitstellung und Ableitung des Gases wie z.B. von einem Füllventil, von dem aus das System über die Verbindungsleitung 24 mit gasförmigem Kältemittel zu befüllen ist, abgesehen, da diese Teile allgemein bekannt sind. Lediglich ein bei einem unzulässigen Überdruck in dem System ansprechendes Überdruckventil 31 ist angedeutet.

Selbstverständlich müssen die das Kältemittel k bzw. k' umschließenden Teile oder Behältnisse gegen Wärmeeinleitung geschützt sein. Zu ihrer thermischen Isolation wird deshalb zweckmäßig eine Vakuumumgebung vorgesehen, wobei gegebenenfalls in den entsprechenden Vakuumräumen zusätzlich noch Isolationsmittel wie z.B. Superisolation oder Isolationsschaum vorgesehen werden können. In Fig. 1 ist das von dem Vakuumgefäß 7 eingeschlossene Vakuum mit V bezeichnet. Es umgibt außerdem das den seitlichen Hohlraum 13 umschließende, sich bis zu der Dichtung 21 erstreckende Rohr. Das das Wärmerohr 20 sowie den Kondensorraum 18 und den Wärmeübertragungskörper 17 umschließende Vakuum ist mit V` bezeichnet. Gegebenenfalls kann auch in dem den Rotor 5 umgebenden, von dem Außengehäuse 3 umschlossenen Innenraum 32 ein Unterdruck erzeugt werden.

Nachteilig an einem System der mechanischen Pumpe 28 und de Ventile 29, 30, 31 ist, dass bei einer der Einfachheit halber nicht dargestellten Anordnung der Teile in einem kryogenen Bereich, bei kryogenen Temperaturen diese Teile sehr störanfällig sind und die Auslegung bewegter Teile auf diese Temperaturen aufwendig und kostenintensiv ist. Gerade in Hinblick auf den Einsatz auf Schiffen, aber auch bei anderen maschinentypischen Einsätzen, ist ein wartungsfreier Betrieb über lange Zeiten notwendig. Mechanisch bewegte Teile sind deshalb auf ein Minimum zu reduzieren, da diese in der Regel störanfällig sind.

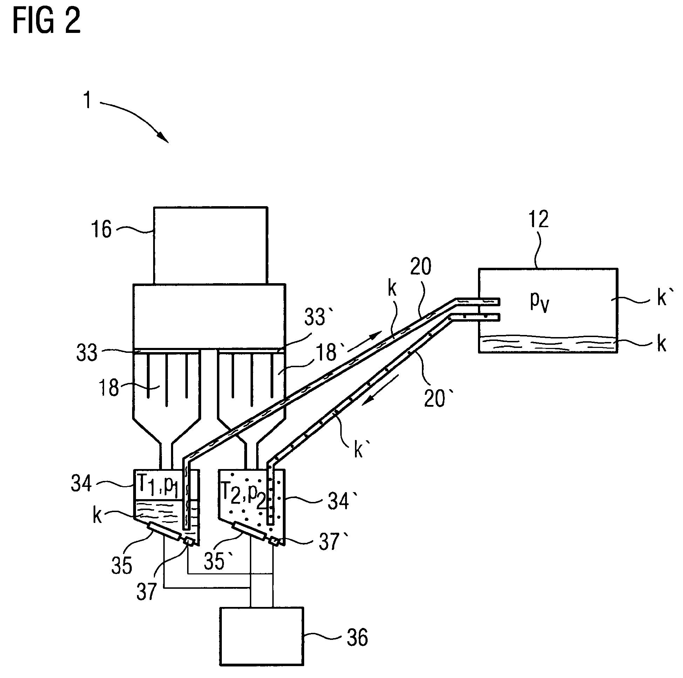

Erfindungsgemäß wird, wie in Fig. 2 dargestellt, in einer zuvor beschriebenen Maschine 2 ein neuartiges Kühlprinzip eingesetzt. Dabei kann auf Teile wie Pumpe 28 und Ventile 29, 30, 31 verzichtet werden, wobei alle weiteren Teile der Maschine analog denen der zuvor in Fig. 1 beschriebenen Maschine sind, soweit im Weiteren nicht anders erwähnt.

Im Gegensatz zu der in Fig. 1 dargestellten Vorrichtung mit einem Kondensorraum 18 weist das in Fig. 2 dargestellte Ausführungsbeispiel der erfindungsgemäßen Vorrichtung 1 zur Kühlung einer supraleitenden Maschine 2 einen ersten und einen zweiten Kondensorraum 18, 18' auf, die jeweils über einen Wärmewiderstand 33, 33' an den (einzigen) Kaltkopf 16 angekoppelt sind. Alternativ können auch drei oder mehr Kondensorräume 18 vorgesehen werden, was der Einfachheit halber in den Figuren nicht dargestellt ist. Jedem Kondensorraum 18, 18' ist ein Sammelbehälter 34, 34' für flüssiges Kühlfluid k zugeordnet. Die Sammelbehälter 34, 34' sind wiederum über eine als Wärmerohr ausgebildete Verbindungsleitung 20, 20' fluidisch mit dem Verdampferraum 12, welcher in Fig. 1 durch den zentralen Hohlraum 12 gegeben ist, verbunden. Die sammelbehälterseitige Öffnung der Verbindungsleitungen 20, 20' ist am Boden der Sammelbehälter 34, 34' angeordnet. Ersichtlich sind die Verbindungsleitungen 20, 20' dazu ausgebildet, das flüssige Kühlfluid k bergauf in den geodätisch höher gelegenen Verdampferraum 12 zu fördern.

Die Kondensorräume 18, 18' mit den zugehörigen Verbindungsleitungen 20, 20' und dem Verdampferraum 12 bilden ein geschlossenes System, d. h., einen nach außen hin fluiddichten Innenraum. Der Innenraum ist mit dem Kühlfluid k, k' (Kältemittel) befüllt, welches im flüssigen k und/oder gasförmigen k' Aggregatzustand, d.h., als flüssiges Kühlfluid k und/oder als gasförmiges Kühlfluid k' vorliegen.

Am Boden der Sammelbehälter 34, 34' ist ein vorliegend als elektrische Heizung ausgebildetes Heizmittel 35, 35' angeordnet, über das die Temperatur T₁, T₂ in den Sammelbehältern 34, 34' unabhängig für die Sammelbehälter 34, 34' derart erhöht werden kann, dass ein Teil des in einem Sammelbehälter 34, 34' befindlichen flüssigen Kühlfluids k verdampfen kann und somit den Druck p₁, p₂ in dem jeweiligen Sammelbehälter 34, 34' erhöht.

Im Betrieb der Maschine 2, bei welchem die supraleitende Wicklung 10 des Rotors 5 wie zuvor schon in Fig. 1 beschrieben auf bzw. unter eine kryogene Temperatur Tₖ gekühlt wird, ist der Verdampferraum 12 teilweise mit flüssigem Kühlfluid k befüllt. Das Kühlfluid k verdampft und führt dadurch Wärmemengen aus dem Rotor 5 ab bzw. kühlt die supraleitende Wicklung 10 des Rotors 5. In Fig. 2 ist die erfindungsgemäße Vorrichtung 1 zur Kühlung einer supraleitenden Maschine 2 zu einem ersten Zeitpunkt gezeigt. Zu diesem Zeitpunkt wird das gasförmige, verdampfte Kühlfluid k' aus dem Verdampferraum 12 über die Verbindungsleitung 20' in den Kondensorraum 18' geleitet. In dem Sammelbehälter 34' und dem Kondensorraum 18' liegt eine Temperatur T₂ unterhalb der Kondensationstemperatur des Kühlfluids k vor, was durch den Kaltkopf 16 erreicht wird, wodurch dem gasförmigen Kühlfluid k' Wärmemenge entzogen wird und es zu flüssigem Kühlfluid k kondensiert. Das flüssige Kühlfluid k sammelt sich in dem Sammelbehälter 34'.

Im ersten Sammelbehälter 34 wird die Temperatur T₁ durch einen Betrieb des Heizmittels 35 auf eine Temperatur oberhalb der Kondensationstemperatur des Kühlfluids k erhöht. Dabei verdampft flüssiges Kühlfluid k und/oder dehnt sich das gasförmige Kühlfluid k' im ersten Sammelbehälter 34 aus, so dass der Druck p₁ im ersten Sammelbehälter 34 auf einen Wert erhöht wird, welcher höher als die Drücke pᵥ im Verdampferraum 12 und p₂ im Kondensorraum 18' ist. Mit anderen Worten wird ein Temperaturunterschied erzeugt, der in einem Druckunterschied resultiert. Dadurch wird flüssiges Kühlfluid k, welches sich in dem Sammelbehälter 34 befindet, durch die Verbindungsleitung 20 in den Verdampferraum 12 gedrückt, und zwar gegen die Wirkung der Schwerkraft, wenn die Druckkraft größer als die Gewichtskraft des Kühlfluids k ist.

Dabei sei an dieser Stelle angemerkt, dass der beschriebene Effekt zusätzlich verstärkt wird durch einen Unterdruck p₂ in dem Kondensorraum 18', welcher durch die Verringerung des Volumens des gasförmigen Kühlfluids k' bei Abkühlung und Kondensation in dem Kondensorraum 18' entsteht. Dieser Unterdruck saugt gasförmiges Kühlfluid k' aus dem Verdampferraum 12 in die Verbindungsleitung 20' an und verringert so den Druck pᵥ im Verdampferraum 12. Der Druckunterschied Δp= (p₁-pᵥ) zwischen dem ersten Kondensorraum 18 und dem Verdampferraum 12 wird dadurch verstärkt und zusätzlich zum Druckausgleich flüssiges Kühlfluid k aus der Verbindungsleitung 20 in den Verdampferraum 12 bewegt.

Der zuvor beschriebene Prozess endet dann, wenn das flüssige Kühlfluid k aus dem Sammelbehälter 34 vollständig oder zumindest nahezu vollständig in den Verdampferraum 12 bewegt wurde. Um eine kontinuierliche Kühlung bzw. einen kontinuierlichen, quasi kontinuierlichen oder einen gepulsten Kühlfluidstrom von flüssigem Kühlfluid k in den Verdampferraum zu gewährleisten, kann rechtzeitig ein Tausch der Temperaturen T₁, T₂ in den Kondensorräumen 18, 18' über den Betrieb der Heizmittel 35, 35' und die Wirkung des Kaltkopfs 16 erfolgen. Dabei kann der Kondensorraum 18 auf eine Temperatur unterhalb der Kondensationstemperatur des Kühlfluids über den Kaltkopf 16 gekühlt werden, wobei das Heizmittel 35 inaktiv ist. Gleichzeitig kann der Kondensorraum 18' über das Heizmittel 35' auf eine Temperatur geheizt werden, welche oberhalb der Kondensationstemperatur des Kühlfluids k liegt. Dies bewirkt, dass zu einem zweiten, in diesem Absatz beschriebenen Zeitpunkt der Kondensorraum 18' wie der Kondensorraum 18 zum ersten Zeitpunkt wirkt und zum zweiten Zeitpunkt der Kondensorraum 18 wie der Kondensorraum 18' zum ersten Zeitpunkt wirkt. Im Kondensorraum 18' wird durch die Erhöhung der Temperatur ein Überdruck aufgebaut und flüssiges Kühlfluid k aus der Verbindungsleitung 20' in dem Verdampferraum 12 bewegt. Da die Situation analog der in Fig. 2 dargestellten Situation ist, nur mit vertauschten Rollen (Temperaturen, Drücken und Fluidströmen) zwischen den Kondensorräumen 18, 18', ist die Situation bzw. der Prozess zum zweiten Zeitpunkt der Einfachheit halber in den Figuren nicht dargestellt.

Es sei darauf hingewiesen, dass bei einer Ausgestaltung mit drei oder mehr Kondensorräumen und Sammelbehältern zu einem weiteren Zeitpunkt ein weiterer Sammelbehälter die Rolle des Sammelbehälters 34 zum ersten Zeitpunkt übernehmen kann. Im vorliegenden Ausführungsbeispiel jedoch wird zu einem dritten Zeitpunkt der Zustand des ersten Zeitpunkts wieder hergestellt, so dass durch ein regelmäßiges Tauschen der Wirkungen der Sammelbehälter 34, 34' bzw. Kondensorräume 18, 18' nach einer festen Zeitperiode oder nach unterschiedlichen Zeiten ein kontinuierlicher, quasi kontinuierlicher oder ein gepulster Betrieb der Vorrichtung 1 zur Kühlung einer supraleitenden Maschine 2 sichergestellt werden kann.

Zur Ansteuerung der Heizmittel 35 ist dabei vorliegend eine Steuereinrichtung 36 vorgesehen, die die Heizmittel 35, 35' aufgrund der Daten von Temperatursensoren 37, 37' ansteuert, welche die Temperatur am Boden der Sammelbehälter 34, 34' messen. Die Temperatur am Boden der Sammelbehälter 34, 34' steigt stark an, wenn das flüssige Kühlfluid k' vollständig oder fast vollständig in den Verdampferraum 12 gedrückt wurde. Zu diesem Zeitpunkt kann dann ein Wechsel des Heizmittelbetriebs mittelbar oder unmittelbar erfolgen.

In diesem Ausführungsbeispiel wird als Heizleistung der Heizmittel 35, 35' konstant bei Betrieb eine Heizleistung verwendet, die im Wesentlichen der Leistung des Kaltkopfes 16 entspricht, so dass ein relativ schnelles Entleeren des gerade beheizten Sammelbehälters 34, 34' ermöglicht wird.

Schließlich sei noch angemerkt, dass die Wärmewiderstände 33, 33', welche im Übrigen aus einer über die Fließgrenze belasteten Indiumlage bestehen, vorliegend definiert gewählt wurden. Sie sind abgestimmt mit der Heizleistung der Heizmittel 35, 35' so gewählt, dass ein optimaler Wirkungsgrad erreicht wird. Geeignete Werte können beispielsweise im Rahmen einer Simulation und/oder eines Optimierungsverfahrens bestimmt werden.

## Patentansprüche

1. Vorrichtung (1) zur Kühlung eines Supraleiters einer supraleitenden Maschine (2), wobei die Vorrichtung (1) einen einzigen Kaltkopf (16) und wenigstens zwei thermisch voneinander entkoppelte Kondensorräume (18, 18'), welche an den einzigen Kaltkopf (16), insbesondere über einen vorbestimmten Wärmewiderstand (33, 33'), thermisch gekoppelt sind, aufweist, und wobei die wenigstens zwei Kondensorräume (18, 18') über jeweils einen Sammelbehälter (34, 34') für flüssiges Kühlfluid (k) mit jeweils einer Verbindungsleitung (20, 20') verbunden sind, über welche die wenigstens zwei Kondensorräume (18, 18') fluidisch mit einem Verdampferraum (12) in Verbindung stehen, und wobei die wenigstens zwei Sammelbehälter (34, 34') derart ausgebildet sind, dass ein Kühlfluid (k, k') in flüssiger Form gegen die Schwerkraft von wenigstens einem Sammelbehälter (34, 34') in den Verdampferraum (12) durch einen Druckunterschied zwischen einem ersten Druck p₁ im ersten Sammelbehälter (34, 34') und einem zweiten Druck p₂ im zweiten Sammelbehälter (34', 34) bewegbar ist, welche jeweils durch einen mittels eines zyklisch betreibbaren Heizmittels (35, 35') in wenigstens einem der Sammelbehälter (34, 34') verdampften Anteil des Kühlfluids (k, k') bestimmt sind.

2. Vorrichtung nach Anspruch 1, **dadurch gekennzeichnet, dass** die Verbindungsleitungen (20, 20') im Bereich des Behälterbodens an den jeweiligen Sammelbehälter (34, 34') angeschlossen sind und/oder die Heizmittel (35, 35') an einer Bodenfläche des jeweiligen Sammelbehälters (34, 34') angekoppelt sind.

3. Vorrichtung nach Anspruch 1 oder 2, **dadurch gekennzeichnet, dass** die Heizmittel (35, 35') mit einer Heizleistung betrieben werden können, die 80% bis 120% der Leistung des Kaltkopfs (16), insbesondere 95% bis 105% der Leistung des Kaltkopfs (16), entspricht.

4. Vorrichtung nach einem der vorangehenden Ansprüche, **dadurch gekennzeichnet, dass** eine Steuereinrichtung (36) zur Ansteuerung der Heizmittel (35, 35'), insbesondere der Einschaltdauer der Heizmittel (35, 35'), in Abhängigkeit der Messwerte von die Temperatur in den Sammelbehältern (34, 34'), insbesondere am Boden der Sammelbehälter (34, 34'), messenden Sensoren (37, 37') vorgesehen ist.

5. Vorrichtung nach einem der vorangehenden Ansprüche, **dadurch gekennzeichnet, dass** als Wärmewiderstand (33, 33') eine Indiumlage und/oder eine Verschraubung vorgesehen ist.

6. Verfahren zur Kühlung einer supraleitenden Maschine (2) unter Verwendung einer Vorrichtung (1) nach einem der vorangehenden Ansprüche, bei dem A) ein Temperaturunterschied zwischen einem wenigstens einem ersten, mit einem an einen Kaltkopf (16) thermisch gekoppelten Kondensorraum (18, 18') verbundenen Sammelbehälter (34, 34') und wenigstens einem zweiten, mit einem an den selben Kaltkopf (16) thermisch gekoppelten zweiten Kondensorraum (18', 18) verbundenen Sammelbehälter (34', 34) durch den Betrieb wenigstens eines Heizmittels herbeigeführt wird, so dass in dem wärmeren Sammelbehälter (34, 34') Kühlfluid (k) verdampft wird und der Druck (p₁, p₂) im Sammelbehälter (34, 34') erhöht wird und dadurch flüssiges Kühlfluid (k) in einer dem wärmeren Sammelbehälter (34, 34') zugeordneten Verbindungsleitung (20, 20') von dem wärmeren Sammelbehälter (34, 34') in einen Verdampferraum (12) bewegt wird, und gleichzeitig gasförmiges Kühlfluid (k') über eine dem kälteren Sammelbehälter (34', 34) zugeordnete Verbindungsleitung (20', 20) von dem Verdampferraum (12) in den kälteren Kondensorraum (18', 18) bewegt wird.

7. Verfahren nach Anspruch 6, **dadurch gekennzeichnet, dass** zeitlich direkt oder indirekt folgend auf den Schritt A) in dem wenigstens einen wärmeren Sammelbehälter (34, 34') die Temperatur (T₁, T₂) verringert oder konstant gehalten wird, und dass in dem wenigstens einen kälteren Sammelbehälter (34', 34) die Temperatur (T₁, T₂) erhöht wird oder konstant gehalten wird.

8. Verfahren nach einem der Ansprüche 6 oder 7, **dadurch gekennzeichnet, dass** das Verfahren als ein kontinuierlicher oder gepulster Prozess des Pumpens von flüssigem Kühlfluid (k) in den Verdampferraum (12) durchgeführt wird.

9. Verfahren nach einem der Ansprüche 6 bis 8, **dadurch gekennzeichnet, dass** eine Bewegung von Kühlfluid (k, k') ausschließlich geregelt oder gesteuert über Druck- und/oder Temperaturunterschiede in den Sammelbehältern (34, 34') und dem Verdampferraum (12) erfolgt, insbesondere bei Druckausgleich durch Kühlfluidbewegung und/oder insbesondere gegen die Schwerkraft.

10. Verfahren nach einem der Ansprüche 6 bis 9, **dadurch gekennzeichnet, dass** in dem Verdampferraum (12) das Kühlfluid (k, k') von einem flüssigen in einen gasförmigen Zustand übergeht und eine rotierende supraleitende Wicklung (10) eines Rotors (5) der supraleitenden Maschine (2) kühlt, wobei die supraleitende Wicklung (10) insbesondere einen Hochtemperatur-Supraleiter umfasst und/oder wobei der Verdampferraum (12) innerhalb des Rotors (5) insbesondere als zylindrischer Hohlraum (12) entlang der Rotationsachse (A) des Rotors (5) rotierbar angeordnet wird.

11. Verfahren nach einem der Ansprüche 6 bis 10, **dadurch gekennzeichnet, dass** die Temperatur (T₁, T₂) in jedem Sammelbehälter (34, 34'), insbesondere am Boden jedes Sammelbehälters (34, 34'), gemessen wird und die Ansteuerung der Heizmittel (35, 35') in Abhängigkeit der gemessenen Temperaturen erfolgt.

12. Verfahren nach einem der Ansprüche 6 bis 11, **dadurch gekennzeichnet, dass** zum Erhöhen der Temperatur (T₁, T₂) in einem Sammelbehälter (34, 34') das Heizmittel (35, 35') mit einer Leistung von 80% bis 120% der Leistung des Kaltkopfes (16), insbesondere 95% bis 105% der Leistung des Kaltkopfes (16), betrieben wird.

13. Verfahren nach einem der Ansprüche 6 bis 12, **dadurch gekennzeichnet, dass** zur Optimierung des Wirkungsgrades ein zwischen dem Kaltkopf (16) und den Kondensorräumen (18, 18') vorgesehener Wärmewiderstand (33, 33') und die Heizleistung der Heizmittel (35, 35') aufeinander abgestimmt werden.

## Claims

1. Device (1) for cooling a superconductor of a super-conductive machine (2), wherein the device (1) has a single cold head (16) and at least two condenser chambers (18, 18') thermally decoupled from one another, which are thermally coupled to the single cold head (16), in particular by way of a predetermined thermal resistor (33, 33'), and wherein the at least two condenser chambers (18, 18') are each connected by way of one collecting vessel (34, 34') each for liquid cooling fluid (k) to one connecting line (20, 20'), by way of which the at least two condenser chambers (18, 18') are fluidically connected to an evaporator chamber (12), and wherein the at least two collecting vessels (34, 34') are embodied such that a cooling fluid (k, k') in liquid form can be moved against the force of gravity from at least one collecting vessel (34, 34') into the evaporator chamber (12) by a pressure difference between a first pressure ***p*₁** in the first collecting vessel (34, 34') and a second pressure ***p*₂** in the second collecting vessel (34', 34), which are determined in each case by a portion of the cooling fluid (k, k') which is evaporated in at least one of the collecting vessels (34, 34') by means of a cyclically operable heating means (35, 35').

2. Device according to claim 1, **characterised in that** the connecting lines (20, 20') are connected in the region of the vessel base to the respective collecting vessel (34, 34') and/or the heating means (35, 35') are coupled to a base surface of the respective collecting vessel (34, 34').

3. Device according to claim 1 or 2, **characterised in that** the heating means (35, 35') can be operated with a heat output which corresponds to 80% to 120% of the output of the cold head (16), in particular 95% to 105% of the output of the cold head (16).

4. Device according to one of the preceding claims, **characterised in that** a control facility (36) for activating the heating means (35, 35'), in particular the switch-on time of the heating means (35, 35'), is provided as a function of the measured values of sensors (37, 37') measuring the temperature in the collecting vessels (34, 34'), in particular at the base of the collecting vessels (34, 34').

5. Device according to one of the preceding claims, **characterised in that** an indium layer and/or a screw connection is provided as a thermal resistor (33, 33').

6. Method for cooling a super-conductive machine (2) using a device (1) according to one of the preceding claims, in which A) a temperature difference between an at least one first collecting vessel (34, 34') connected to a condenser chamber (18, 18') thermally coupled to a cold head (16) and at least one second collecting vessel (34', 34) connected to a second condenser chamber (18', 18) thermally coupled to the same cold head (16) is effected by the operation of at least one heating means, so that in the warmer collecting vessel (34, 34') cooling fluid (k) is evaporated and the pressure (*p*₁, *p*₂) in the collecting vessel (34, 34') is increased and as a result liquid cooling fluid (k) in a connecting line (20, 20') assigned to the warmer collecting vessel (34, 34') is moved from the warmer collecting vessel (34, 34') into an evaporator chamber (12) and gaseous cooling fluid (k') is at the same time moved by way of a connecting line (20', 20) assigned to the colder collecting vessel (34', 34') from the evaporator chamber (12) into the colder condenser chamber (18', 18).

7. Method according to claim 6, **characterised in that** temporally directly or indirectly after step A) the temperature (*T*₁, *T*₂) is reduced or kept constant in the at least one warmer collecting vessel (34, 34'), and that in the at least one colder collecting vessel (34', 34), the temperature (*T*₁, *T*₂) is increased or kept constant.

8. Method according to one of claims 6 or 7, **characterised in that** the method is implemented as a continual or pulsed process of pumping the liquid cooling fluid (k) into the evaporator chamber (12).

9. Method according to one of claims 6 to 8, **characterised in that** a movement of cooling fluid (k, k') takes place in an exclusively regulated or controlled manner by way of pressure and/or temperature differences in the collecting vessels (34, 34') and the evaporator chamber (12), in particular with a pressure equalisation by cooling fluid movement and/or in particular against the force of gravity.

10. Method according to one of claims 6 to 9, **characterised in that** in the evaporator chamber (12), the cooling fluid (k, k') passes from a liquid into a gaseous state and cools a rotating super-conductive winding (10) of a rotor (5) of the super-conductive machine (2), wherein the super-conductive winding (10) in particular comprises a high-temperature superconductor and/or wherein the evaporator chamber (12) within the rotor (5) is arranged to be rotatable in particular as a cylindrical cavity (12) along the axis of rotation (A) of the rotor (5).

11. Method according to one of claims 6 to 10, **characterised in that** the temperature (*T*₁, *T*₂) in each collecting vessel (34, 34'), in particular at the base of each collecting vessel (34, 34') is measured and the actuation of the heating means (35, 35') takes place as a function of the measured temperatures.

12. Method according to one of claims 6 to 11, **characterised in that** in order to increase the temperature (*T*₁, *T*₂) in a collecting vessel (34, 34'), the heating means (35, 35') is operated with an output of 80% to 120% of the output of the cold head (16), in particular 95% to 105% of the output of the cold head (16).

13. Method according to one of claims 6 to 12, **characterised in that** in order to optimise the degree of efficiency, a thermal resistor (33, 33') provided between the cold head (16) and the condenser chambers (18, 18') and the heating output of the heating means (35, 35') are attuned to one another.

## Revendications

1. Dispositif ( 1 ) de refroidissement d'un supraconducteur d'une machine ( 2 ) supraconductrice, le dispositif ( 1 ) ayant une tête ( 16 ) froide unique et au moins deux chambres ( 18, 18' ) de condenseur, qui sont découplées thermiquement l'une de l'autre et qui sont couplées thermiquement à la tête ( 16 ) froide unique, notamment par une résistance ( 33, 33' ) thermique définie à l'avance, et dans lequel les au moins deux chambres ( 18, 18' ) de condenseur communiquent avec respectivement un conduit ( 20, 20' ) de liaison par respectivement un réservoir ( 34, 34' ) collecteur de fluide ( k ) de refroidissement liquide, conduit ( 20, 20' ) de liaison par lequel les au moins deux chambres ( 18, 18' ) de condenseur communiquent fluidiquement avec une chambre ( 12 ) d'évaporateur, et les au moins deux réservoirs ( 34, 34' ) collecteurs sont constitués de manière à ce qu'un fluide ( k, k' ) de refroidissement sous forme liquide puisse, à l'encontre de la force de la gravité, passer d'au moins un réservoir ( 34, 34' ) collecteur à la chambre ( 12 ) d'évaporateur par une différence de pression entre un première pression p₁ dans le premier réservoir ( 34, 34' ) collecteur et une deuxième pression p₂ dans le deuxième réservoir ( 34, 34' ) collecteur, qui sont définies respectivement par une proportion du fluide ( k, k' ) de refroidissement évaporé dans au moins l'un des réservoirs ( 34, 34' ) collecteur à l'aide d'un agent ( 35, 35' ) de chauffage pouvant fonctionner cycliquement.

2. Dispositif suivant la revendication 1, **caractérisé en ce que** les conduits ( 20, 20' ) de liaison sont raccordés dans la partie du fond du réservoir au réservoir ( 34, 34' ) collecteur respectif et/ou les moyens ( 35, 35' ) de chauffage sont couplés à une surface du fond du réservoir ( 34, 34' ) collecteur respectif.

3. Dispositif suivant la revendication 1 ou 2, **caractérisé en ce que** les moyens ( 35, 35' ) de chauffage peuvent fonctionner à une puissance de chauffage qui correspond à 80 % à 20 % de la puissance de la tête froide, notamment à 95 % à 105 % de la puissance de la tête ( 16 ) froide.

4. Dispositif suivant l'une des revendications précédentes, **caractérisé en ce qu'**il est prévu un dispositif ( 36 ) de commande du moyen ( 35, 35' ) de chauffage, notamment de la durée de mise en circuit du moyen ( 35, 35' ) de chauffage en fonction des valeurs de mesure de la température dans les réservoirs ( 34, 34' ) collecteurs, notamment des capteurs ( 37, 37' ) mesurant au fond des réservoirs ( 34, 34' ) collecteurs.

5. Dispositif suivant l'une des revendications précédentes, **caractérisé en ce qu'**il est prévu comme résistance ( 33, 33' ) thermique une couche d'indium et/ou un vissage.

6. Procédé de refroidissement d'une machine ( 2 ) supraconductrice en utilisant un dispositif ( 1 ) suivant l'une des revendications précédentes, dans lequel
A) on provoque par le fonctionnement d'au moins un moyen de chauffage une différence de température entre un réservoir ( 34, 34' ) collecteur communiquant avec au moins une première chambre ( 18, 18' ) de condenseur couplée thermiquement à une tête ( 16 ) froide et au moins un deuxième réservoir ( 34, 34' ) collecteur communiquant avec une deuxième chambre ( 18, 18' ) de condenseur couplée thermiquement à la même tête ( 16 ) froide, de manière à évaporer du fluide ( k ) de refroidissement dans le réservoir ( 34, 34' ) collecteur plus chaud et à élever la pression ( p₁, p₂ ) dans le réservoir ( 34, 34' ) collecteur et ainsi à faire passer du fluide ( k ) de refroidissement liquide dans un conduit ( 20, 20' ) de liaison associé au réservoir ( 34, 34' ) collecteur plus chaud du réservoir ( 34, 34' ) collecteur plus chaud à une chambre ( 12 ) d'évaporateur et, en même temps, à faire passer du fluide ( k' ) de refroidissement en forme de gaz, par l'intermédiaire d'un conduit ( 20, 20' ) de liaison associé au réservoir ( 34, 34' ) collecteur plus froid, de la chambre ( 12 ) d'évaporateur à la chambre ( 18, 18' ) de condenseur plus froide.

7. Procédé suivant la revendication 6, **caractérisé en ce que** l'on abaisse ou l'on maintient constante la température ( T₁, T₂ ) directement ou indirectement dans le temps à la suite du stade A) dans le au moins un réservoir ( 34, 34' ) collecteur plus chaud et **en ce que**, dans le au moins un réservoir ( 34, 34' ) collecteur plus froid, l'on élève la température ( T₁, T₂ ) ou on la maintien constante.

8. Procédé suivant l'une des revendications 6 ou 7, **caractérisé en ce qu'**on effectue le procédé sous la forme d'un processus continu et pulsé de pompage de fluide ( k ) de refroidissement liquide dans la chambre ( 12 ) d'évaporateur.

9. Procédé suivant l'une des revendications 6 à 8, **caractérisé en ce que** l'on régule ou l'on commande un déplacement du fluide ( k, k' ) de refroidissement exclusivement par des différences de pression et/ou de température dans les réservoirs ( 34, 34' ) collecteurs et dans la chambre ( 12 ) d'évaporateur, notamment par équilibrage de la pression par déplacement du fluide de refroidissement et/ou notamment à l'encontre de la force de la gravité.

10. Procédé suivant l'une des revendications 6 à 9, **caractérisé en ce que**, dans la chambre ( 12 ) d'évaporateur, le fluide ( k, k' ) de refroidissement passe d'un état liquide à un état gazeux et refroidit un enroulement ( 10 ) supraconducteur tournant d'un rotor ( 5 ) de la machine ( 2 ) supraconductrice, l'enroulement ( 10 ) supraconducteur comprenant notamment un supraconducteur à haute température, et/ou la chambre ( 12 ) d'évaporateur est montée tournante à l'intérieur du rotor ( 5 ), notamment sous la forme d'une cavité ( 12 ) cylindrique s'étendant le long de l'axe ( A ) de rotation du rotor ( 5 ).

11. Procédé suivant l'une des revendications 6 à 10, **caractérisé en ce qu'**on mesure la température ( T₁, T₂ ) dans chaque réservoir ( 34, 34' ) collecteur, notamment au fond de chaque réservoir ( 34, 34' ) collecteur, et on effectue la commande des moyens ( 35, 35' ) de chauffage en fonction des températures mesurées.

12. Procédé suivant l'une des revendications 6 à 11, **caractérisé en ce que**, pour élever la température ( T₁, T₂ ) dans un réservoir ( 34, 34' ) collecteur, on fait fonctionner le moyen ( 35, 35' ) de chauffage à une puissance de 80 % à 120 % de la puissance de la tête ( 16 ) froide, notamment de 95 % à 105 % de la puissance de la tête ( 16 ) froide.

13. Procédé suivant l'une des revendications 6 à 12, **caractérisé en ce que**, pour optimiser le rendement, on adapte une résistance ( 33, 33' ) thermique, prévue entre la tête ( 16 ) froide et les chambres ( 18, 18' ) de condenseur, et la puissance calorifique du moyen ( 35, 35' ) de chauffage entre elles.
